# EUROPÄISCHE PATENTSCHRIFT

(11) **EP 0 735 302 B1**
(45) Veröffentlichungstag und Bekanntmachung des Hinweises auf die Patenterteilung: **04.07.2001**
(21) Anmeldenummer: 96104605.9
(22) Anmeldetag: 22.03.1996
(51) Int. Cl.: F16K 27/00

(54) **Modulares Ventilsystem zum Sammeln und Verteilen von Flüssigkeiten**
Modular valve system for collecting and distributing fluids
Système modulaire de soupapes pour collection et distribution de fluides

(30) Priorität: 28.03.1995 DE 19511395
(43) Veröffentlichungstag der Anmeldung: 02.10.1996
(73) Patentinhaber: Bürkert Werke GmbH & Co., D-74653 Ingelfingen (DE)
(72) Erfinder: Hettinger, Gerhard, 74653 Ingelfingen (DE)
(74) Vertreter: Degwert, Hartmut, Dipl.-Phys.

(56) Entgegenhaltungen:
- DE-A- 2 034 494
- DE-A- 2 312 883
- DE-A- 2 923 534
- DE-A- 2 949 763
- FR-A- 1 603 696
- GB-A- 2 053 422
- US-A- 3 993 091

## Beschreibung

Die Erfindung betrifft ein modulares Ventilsystem zum Sammeln und Verteilen von Flüssigkeiten, aufgebaut aus anreihbaren Modulen, die eine Sammelfunktion oder Verteilfunktion aufweisen.

Es gibt in der technischen Praxis zahlreiche Anwendungen, bei denen Flüssigkeiten unterschiedlicher Art oder Temperatur gemischt werden, um sie anschließend auf einen oder mehrere Verbraucher zu verteilen. Um für die Vielzahl aller möglichen Kombinationen von Verteil- und Sammelfunktion über die notwendige Flexibilität zu verfügen, werden Ventilsysteme modular aus anreihbaren Einzelventilen aufgebaut, die gemeinsam einen zentralen Hauptkanal bilden und über zwei Zuganker in einem Block zusammengehalten werden. Für den Aufbau eines solchen Ventilsystems werden mindestens zwei verschiedene Ventiltypen benötigt, ein Ventil mit Sammelfunktion und ein Ventil mit Verteilfunktion. Für verschiedene Ventilfunktionen oder verschiedene Nennweiten werden aber verschiedene Ventilgrößen benötigt. So können bei kleineren Nennweiten direkt gesteuerte Ventile verwendet werden, während für größere Nennweiten fremdgesteuerte Ventile besser geeignet sind.

Aus der DE-A-2 034 494 ist ein gattungsgemäßes modulares Ventilsystem bekannt, das aus anreihbaren Modulen aufgebaut ist, die jeweils einen gestreckten Grundkörper mit einem in Längsrichtung verlaufenden Hauptkanal und wenigstens zwei Aufnahmeräumen aufweisen, von denen jeder eine mit dem Hauptkanal verbundene Schnittstellenöffnung und eine mit einem quer zum Hauptkanal verlaufenden Anschlußkanal verbundene Schnittstellenöffnung aufweist.

Die DE-A-2 312 883 zeigt ein Ventil, bei dem es zur Durchführung von Instandsetzungsarbeiten möglich ist, mit Hilfe einer drehbaren Hülse den Einlaßstutzen abzusperren und somit den Eintritt des Mediums ins Ventil zu verhindern. Durch zusätzliche Maßnahmen kann, falls dies während den Arbeiten erforderlich ist, der Einlaß- mit dem Auslaßstutzen des Ventils verbunden bleiben, wenn durch die Drehung der Hülse der Kanal abgesperrt ist.

In der DE-A-29 49 763 ist ein Spindelventil beschrieben, das sich in zweierlei Weise betreiben läßt. Für den Übergang vom ersten Betriebsmodus zum zweiten wird das Gesamtgehäuse mit dem Ventilkörper und dem Mantel, d.h. das Ventil als Ganzes vom Verteilerkopf abgeschraubt und um 180° verdreht wieder darauf festgeschraubt.

Durch die Erfindung wird ein modulares Ventilsystem zum Sammeln und Verteilen von Flüssigkeiten bereitgestellt, das trotz vielfältiger Kombinationsmöglichkeiten von Ventilfunktionen, Nennweiten und dergleichen anschlußseitig mit wenigen untereinander gleichen, anreihbaren Modulen auskommt. Gemäß der Erfindung weist wie im kemzeichnenden Teil von Anspruch 1 definiert, wenigstens einer der Module einen Ventileinsatz mit Ventilsitz für jeden Aufnahmeraum auf, der wahlweise in zwei um 180° gegeneinander verdrehten Stellungen in den zugehörigen Aufnahmeraum einsetzbar ist und zwei Anschlußöffnungen aufweist, die in jeder der zwei Stellungen an die Schnittstellenöffnungen des zugehörigen Aufnahmeraumes anschließen. Je nachdem, ob der Ventileinsatz in der einen oder in der anderen Stellung in den Aufnahmeraum des Grundkörpers eingesetzt ist, führt er eine Sammelfunktion oder eine Verteilfunktion aus. Aus wenigen Typen von Grundkörpern kann eine Grundschiene aufgebaut werden, die alle erdenklichen Kombinationen von Ventil-, Anschluß- oder auch Sensorfunktionen abdecken kann. Aus Grundkörpern mit zwei Aufnahmeräumen und solchen mit drei Aufnahmeräumen können Grundschienen mit zwei, drei, vier, fünf, sechs usw. Funktionen aufgebaut werden. Auch können Grundkörper mit verschiedenen Nennweiten ihrer Schnittstellenöffnungen für die Ventileinsätze miteinander kombiniert werden, da sie über dieselbe Grundform, identische Nennweite ihres Hauptkanals und gleiche stirnseitige Anschlüsse für benachbarte Grundkörper, Blinddeckel oder Abschlußplatten mit einem Gewindeanschluß oder Schlauchanschluß verfügen. Die Kopplung benachbarter Grundkörper erfolgt vorzugsweise durch eine Rastverbindung.

Schließlich wird für die Verteilfunktion derselbe Ventileinsatz wie für die Sammelfunktion verwendet, wodurch die Anzahl der benötigten Ventiltypen halbiert wird.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Figur 1: ein Beispiel eines aus zwei Grundkörpern und fünf Ventileinsätzen aufgebauten Ventilblocks in schematischer Seitenansicht;
- Figur 2: eine Stirnansicht des in Figur 1 gezeigten Ventilblocks;
- Figur 3: eine Seitenansicht eines Ventilblocks mit zwei Ventileinsätzen;
- Figur 4a: einen Querschnitt des in Figur 3 gezeigten Ventilblocks mit einem Ventileinsatz für eine Verteilfunktion;
- Figur 4b: einen Querschnitt des Ventilblocks durch einen Ventileinsatz mit Sammelfunktion;
- Figur 5: einen Querschnitt einer Ausführung des Ventilblocks mit einem in den Aufnahmeraum des Grundkörpers eingesetzten Sensoreinsatz, wobei ein Verschlußdeckel und seine Befestigung in Explosionsdarstellung gezeigt ist;
- Figur 6: eine Seitenansicht eines Ventilblocks mit zwei Ventileinsätzen für eine größere Nennweite;
- Figur 7a: einen Querschnitt des Ventilblocks nach Figur 6 durch einen Ventileinsatz mit Verteilfunktion; und
- Figur 7b: einen Querschnitt des Ventilblocks durch einen Ventileinsatz mit Sammelfunktion; und
- Figur 8: eine teilweise geschnittene Perspektivansicht eines Grundkörpers und eines Ventileinsatzes.

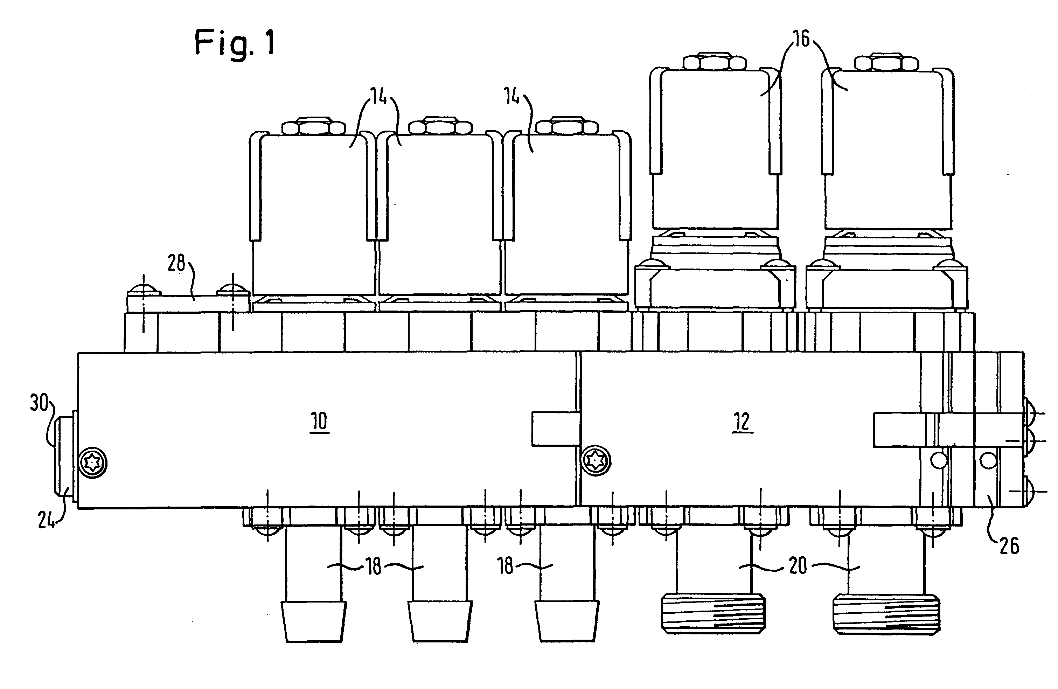

Der in Figur 1 gezeigte Ventilblock besteht aus zwei länglich gestreckten, quaderförmigen Grundkörpern 10, 12, die an ihren einander zugewandten Stirnflächen durch eine Rastverbindung miteinander gekoppelt sind, und fünf Ventileinsätzen, von denen die mit 14 bezeichneten für eine kleinere Nennweite als die mit 16 bezeichneten ausgebildet sind. An der Bodenfläche der Grundkörper 10, 12 befinden sich entsprechend drei Medienanschlüsse 18 der geringeren Nennweite sowie zwei Medienanschlüsse 20 der größeren Nennweite. An der freien Stirnfläche des Grundkörpers 10 mündet ein in Längsrichtung durchgehender Hauptkanal 30, der mit einem entsprechenden Hauptkanal des Grundkörpers 10 verbunden und ausgefluchtet ist, in einem Anschlußteil 24, das mit einem Innengewinde, Außengewinde, Schlauchstutzen oder Lötanschluß versehen sein kann. Bei der gezeigten Ausführungsform kann es in eine passende und mit einer Dichtung versehene Anschlußöffnung an der Stirnfläche eines weiteren Grundkörpers eingesteckt werden. Alternativ wird ein Blinddeckel 26, wie an der freien Stirnfläche des Grundkörpers 12, zum Verschließen des Hauptkanals aufgesetzt, oder auch ein Anschlußdeckel, der mit einem Schlauch- oder Gewindeanschluß versehen ist.

Neben den Ventileinsätzen 14, 16 ist der erste Einbauplatz für einen weiteren Ventileinsatz freigeblieben. Statt eines Ventileinsatzes ist hier ein Verschlußdeckel 28 aufgeschraubt.

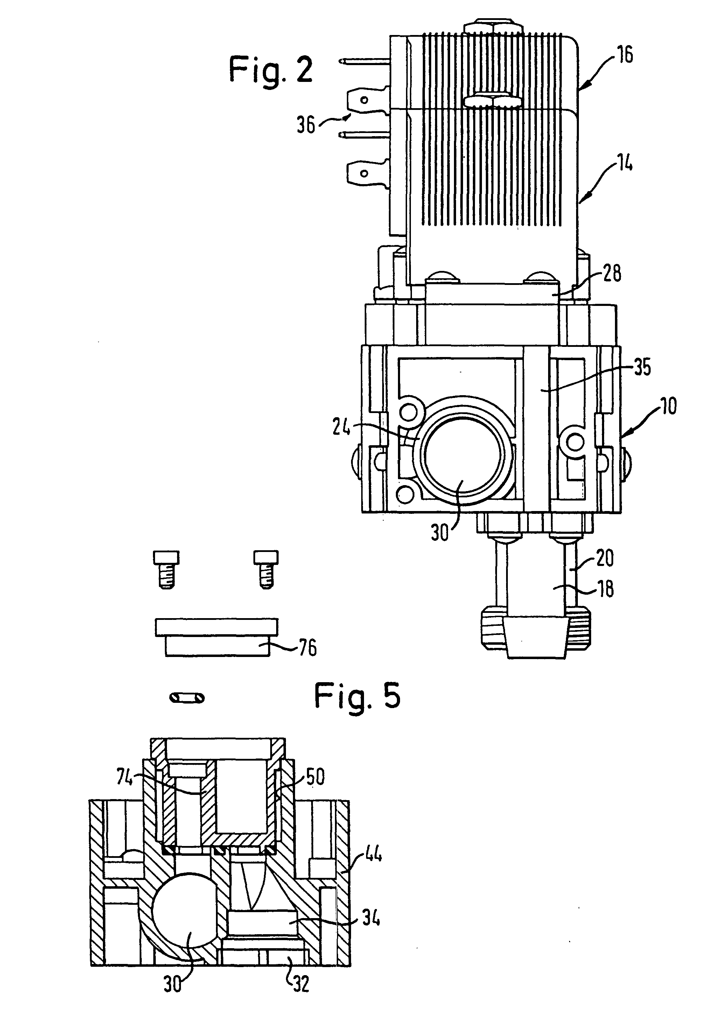

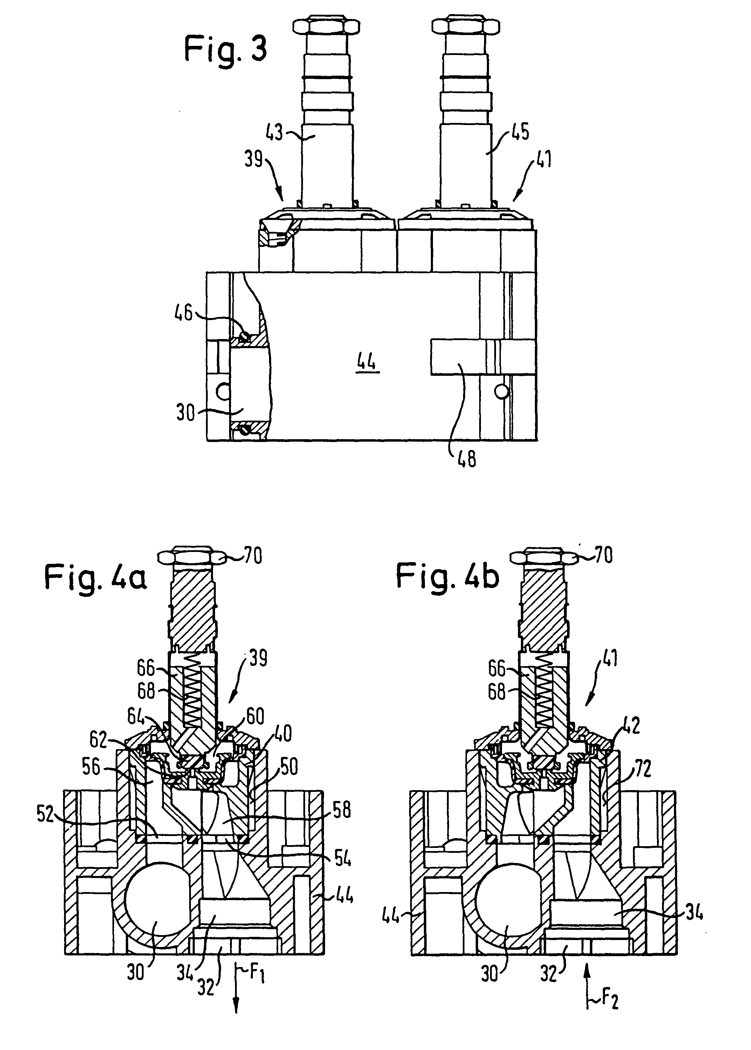

Wie aus Figur 2 ersichtlich ist, sind die Grundkörper 10 und 12 im Querschnitt rechteckförmig. Der bereits erwähnte, in Längsrichtung durch den gesamten Ventilblock verlaufende Hauptkanal ist mit 30 bezeichnet. An der Bodenfläche der Grundkörper sind einheitliche Anschlußöffnungen 32 für die Medienanschlüsse 18 und 20 gebildet, die gerade nach unten gerichtet sind. Ein Anschlußkanal 34, der von der Anschlußöffnung 32 an der Bodenfläche der Grundkörper 10, 12 ausgeht, erstreckt sich quer zu dem Hauptkanal 30 und mündet gegenüber dem betreffenden Ventileinsatz, wie unter Bezugnahme auf die Figuren 4a und 4b noch näher erläutert werden wird. Aus Figur 2 ist schließlich noch ersichtlich, daß die elektrischen Anschlüsse 36 der Magnetantriebe für die Ventileinsätze 14, 16 sich auf der von den Medienanschlüssen 18, 20 abgewandten Rückseite des Ventilblocks befinden.

Bei der in Figuren 3, 4a und 4b gezeigten Ausführung eines Ventilblocks sind zwei gleiche Ventileinheiten 39, 41 gezeigt, die aus je einem (zur Vereinfachung ohne Elektromagnet gezeigten) Ventilantrieb 43 bzw. 45 sowie einem Ventileinsatz 40 bzw. 42 gebildet sind. Die Ventileinsätze 40, 42 sind in einem Grundkörper 44 für zwei Ventileinsätze aufgenommen. Sie sind für eine relativ kleine Nennweite von beispielsweise 10 mm ausgelegt.

Figur 3 läßt durch einen Teilschnitt des Grundkörpers 44 einen kurzen Rohrstutzen erkennen, mit dem der Hauptkanal 30 ausmündet und der mit einem Dichtring 46 ausgestattet ist. Ferner sind seitliche Rasthaken 48 zu erkennen, die zur Ankopplung eines weiteren Grundkörpers oder auch eines Blinddeckels oder einer Anschlußplatte dienen.

Der in Figur 4a gezeigte Ventileinsatz 40 ist in einen runden Aufnahmeraum 50 des Grundkörpers 44 eingesetzt, wobei eine Arretierung mittels Zentriernocken erfolgt. Der Ventileinsatz 40 kann um 180° verdreht eingesetzt werden. Der Aufnahmeraum 50 besitzt an seinem Boden zwei Schnittstellenöffnungen 52, 54. Der Ventileinsatz 40 hat an seinem Boden Schnittstellenöffnungen 52, 54, die fluchtend den entsprechenden Anschlußöffnungen gegenüberliegen. Über diese Anschlußöffnungen enden die zwei Medienkanäle 56, 58, deren Verbindung durch den Ventileinsatz 40 gesteuert wird. Dieser Ventileinsatz 40 weist in herkömmlicher Weise eine Ventilkammer 60, einen Dichtsitz 62 und einen Schließkörper 64 auf, der durch einen Magnetanker 66 bewegt wird. Durch eine Druckfeder 68 wird der Magnetanker 66 in seine Schließstellung belastet. Die mit einer Schraubmutter 70 gesicherten Magnetantriebe sind in den Figuren 3, 4a und 4b nicht dargestellt.

Mit der in Figur 4a gezeigten Einbaustellung des Ventileinsatzes 40 ergibt sich eine Verteilfunktion für den Ventileinsatz 40, wie durch einen Pfeil F₁ angedeutet.

Der in Figur 4b gezeigte Ventileinsatz 42 ist baugleich mit dem Ventileinsatz 40, jedoch um 180° verdreht und ebenfalls mittels Nocken zentriert in den benachbarten Aufnahmeraum 72 eingesetzt. Durch die gegenüber Figur 4a um 180° verdrehte Einbaustellung ergibt sich eine Umkehrung der Ventilfunktion. Wie durch einen Pfeil F₂ angedeutet, hat die Ventileinheit 41 eine Sammelfunktion.

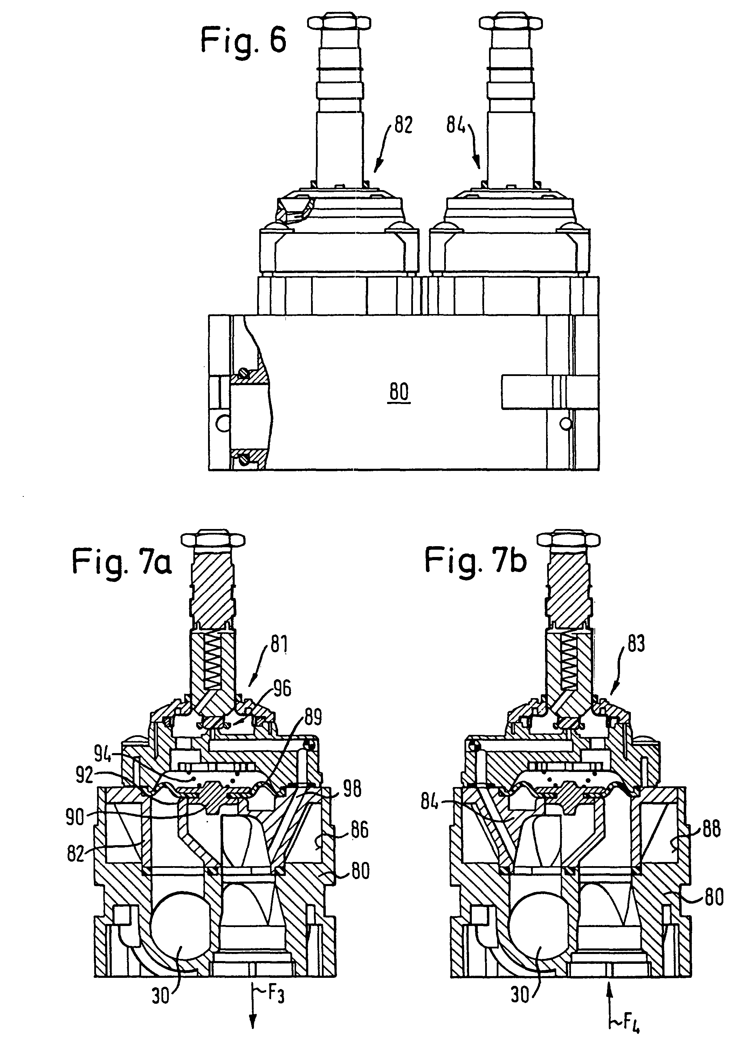

Figur 5 veranschaulicht die Möglichkeit, in beispielsweise den Aufnahmeraum 50 des Grundkörpers 44 anstelle eines Ventileinsatzes einen Sensoreinsatz 74 einzusetzen. Dieser Sensoreinsatz 74 kann beispielsweise einen Temperaturfühler aufnehmen. Er wird durch einen mittels Schrauben befestigten Verschluß 76 verschlossen.

Alternativ kann jeder Aufnahmeraum eines Grundkörpers durch einen Anschlußeinsatz abgeschlossen werden, der mit einem Medienanschluß versehen ist, beispielsweise einem Schraubanschluß oder Schlauchanschluß.

Die Figuren 6, 7a und 7b zeigen eine Ausführungsform eines Ventilblocks 80, der ebenfalls für zwei Ventileinheiten 81 bzw. 83 mit Ventileinsätzen 82, 84 vorgesehen ist, die mit einer größeren Nennweite von beispielsweise 13 mm ausgelegt sind.

Der Grundkörper 80 ist an seinen Stirnflächen in gleicher Weise ausgebildet wie der Grundkörper 44 bei der zuvor beschriebenen Ausführungsform und kann daher auch mit einem Grundkörper für kleinere Nennweiten gekoppelt werden. Die Ventileinsätze 82, 84 benötigen aber größere, ebenfalls runde Aufnahmeräume 86, 88. Wegen der größeren Nennweite ist eine Ausführung der Ventileinheiten 81, 83 mit Fremdsteuerung zweckmäßig. In an sich bekannter Weise enthält jede Ventileinheit 81 bzw. 83 einen an einer Membran 89 eingespannten Schließkörper 90, der mit einem Dichtsitz 92 zusammenwirkt, eine Druckfeder 94, die den Schließkörper 90 gegen den Dichtsitz 92 belastet, und ein Fremdsteuerventil 96, durch das der Durchfluß in einem Steuerkanal 98 gesteuert wird. Der Magnetantrieb des Fremdsteuerventils 96 ist wiederum nicht dargestellt.

Bei der in Figur 7a gezeigten Einbauorientierung des Ventileinsatzes 82 hat die Ventileinheit 81 eine Verteilfunktion, wie durch einen Pfeil F₃ angedeutet.

Der in Figur 7b gezeigte Ventileinsatz 84 ist baugleich mit dem Ventileinsatz 82, jedoch um 180° verdreht in dem Aufnahmeraum 88 angeordnet. Dadurch ergibt sich für die Ventileinheit 83 eine Sammelfunktion, wie durch einen Pfeil F₄ angedeutet.

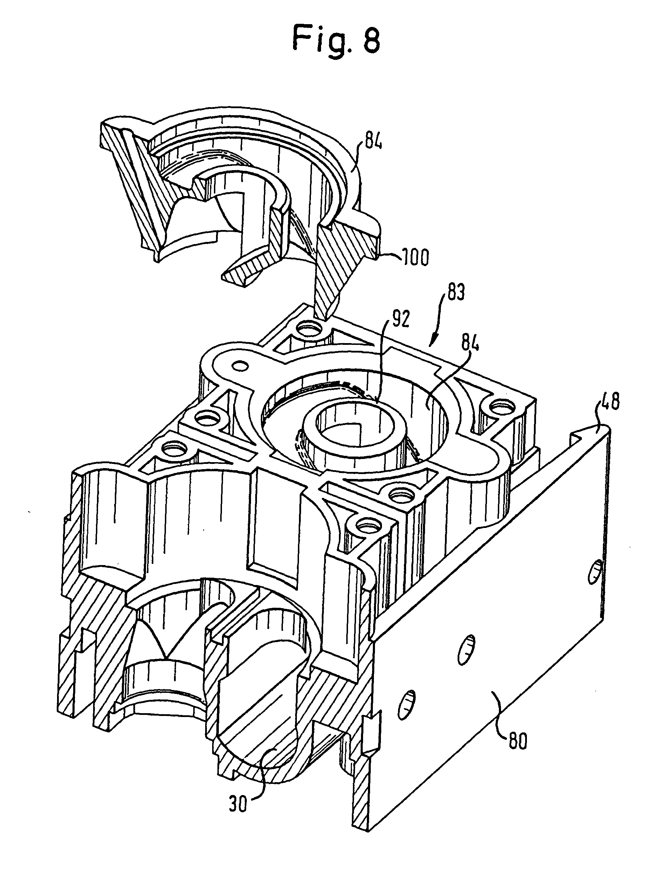

Figur 8 zeigt anschaulich die Ventileinheit 83 mit dem Ventileinsatz 84, der sowohl eingesetzt als auch nochmals gesondert dargestellt ist. Man erkennt auch die Rasthaken 48 am Grundkörper 80 sowie die Zentriernocken 100, die für einen korrekten Sitz des Ventileinsatzes 84 in dem Aufnahmeraum 88 des Grundkörpers 80 sorgen.

## Patentansprüche

1. Modulares Ventilsystem zum Sammeln und Verteilen von Flüssigkeiten, aufgebaut aus anreihbaren Modulen, die eine Sammelfunktion oder Verteilfunktion aufweisen,
wobei jeder Modul einen gestreckten Grundkörper (10, 12; 44; 80) mit einem in Längsrichtung verlaufenden Hauptkanal (30) und wenigstens zwei Aufnahmeräumen (50, 72; 86, 88), von denen jeder eine mit dem Hauptkanal (30) verbundene Schnittstellenöffnung (52) und eine mit einem quer zum Hauptkanal (30) verlaufenden Anschlußkanal verbundene Schnittstellenöffnung (54) aufweist,
dadurch gekennzeichnet, daß wenigstens einer der Module einen Ventileinsatz (14, 16; 40, 42; 82, 84) mit Ventilsitz für jeden Aufnahmeraum aufweist, der wahlweise in zwei um 180° gegeneinander verdrehten Stellungen in den zugehörigen Aufnahmeraum einsetzbar ist und zwei Anschlußöffnungen aufweist, die in jeder der zwei Stellungen an die Schnittstellenöffnungen (52, 54) des zugehörigen Aufnahmeraumes anschließen;
und daß der Ventileinsatz (14, 16; 40, 42; 82, 84), je nachdem, ob er in der einen oder in der anderen Stellung in den Aufnahmeraum des Grundkörpers (10, 12; 44, 80) eingesetzt ist, eine Sammelfunktion oder eine Verteilfunktion ausführt.

2. Ventilsystem nach Anspruch 1, dadurch gekennzeichnet, daß der Hauptkanal (30) jedes Grundkörpers (10, 12) mit dem eines benachbarten Grundkörpers ausgefluchtet und verbunden ist.

3. Ventilsystem nach Anspruch 2, dadurch gekennzeichnet, daß je zwei benachbarte Grundkörper (10, 12) durch eine Rastverbindung lösbar aneinander gekoppelt sind.

4. Ventilsystem nach Anspruch 2, dadurch gekennzeichnet, daß die quer zum Hauptkanal (30) des Grundkörpers verlaufenden Anschlußkanäle (34) mit je einer Anschlußöffnung (32) an der vom Ventileinsatz abgewandten Bodenfläche des Grundkörpers (10) versehen sind.

5. Ventilsystem nach Anspruch 2, dadurch gekennzeichnet, daß eine Grundschiene aus zwei Typen von Grundkörpern (10, 12) aufbaubar ist, die sich in der Anzahl von Aufnahmeräumen unterscheiden.

6. Ventilsystem nach einem der vorstehenden Ansprüche, dadurch gekennzeichnet, daß an jeder Stirnfläche eines Grundkörpers (10, 12) wahlweise ein weiterer Grundkörper, ein Blinddeckel oder ein Medienanschluß ansetzbar ist.

7. Ventilsystem nach einem der vorstehenden Ansprüche, dadurch gekennzeichnet, daß in jeden Aufnahmeraum des Grundkörpers (44) wahlweise ein Sensoreinsatz (74) einsetzbar ist.

8. Ventilsystem nach einem der vorstehenden Ansprüche, dadurch gekennzeichnet, daß in jeden Aufnahmeraum (50, 72) des Grundkörpers (10, 12) wahlweise ein Einsatz mit einem Medienanschluß einsetzbar ist.

9. Ventilsystem nach einem der Ansprüche 2 bis 8, dadurch gekennzeichnet, daß eine Grundschiene aus Grundkörpern (10, 12) gleicher Nennweite des Hauptkanals (30), aber verschiedener Nennweite der Schnittstellenöffnungen für die Ventileinsätze (14, 16) aufbaubar ist.

## Claims

1. A modular valve system for the collection and distribution of liquids, constructed of modules adapted to be fitted to each other in-line, which have a collecting function or a distributing function,
each module comprising an elongated base body (10, 12; 44; 80) having a main channel (30) extending in the longitudinal direction and at least two accommodation spaces (50, 72; 86, 88), each of which includes an interface opening (52) connected with the main channel (30) and an interface opening (54) connected with a connecting channel extending transversely to the main channel (30),
characterized in that at least one of the modules includes a valve core (14, 16; 40, 42; 82, 84) having a valve seat for each accommodation space, which is adapted for selective insertion into the associated accommodation space in either of two positions angularly spaced by 180° with respect to each other and includes a pair of connecting ports which connect to the interface openings (52, 54) of the associated accommodation space in each of the two positions;
and in that the valve core (14, 16; 40, 42; 82, 84) performs a collecting function or a distributing function, depending on whether it is inserted in the accommodation space of the base body (10, 12; 44, 80) in the one or in the other position.

2. The valve system as claimed in claim 1, characterized in that the main channel (30) of each base body (10, 12) is aligned and connected with that of a neighboring base body.

3. The valve system as claimed in claim 2, characterized in that every two neighboring base bodies (10, 12) are releasably coupled with each other by a latching connection.

4. The valve system as claimed in claim 2, characterized in that the connecting channels (34) extending transversely to the main channel (30) of the base body are provided each with a connecting port (32) on the bottom surface of the base body (10) facing away from the valve core.

5. The valve system as claimed in claim 2, characterized in that a base rail may be built up of two types of base bodies (10, 12) which differ in the number of accommodation spaces.

6. The valve system as claimed in any one of the preceding claims, characterized in that a further base body, a blind cover or a fluid port may be selectively fitted to each end face of a base body (10, 12).

7. The valve system as claimed in any one of the preceding claims, characterized in that a sensor insert (74) may be optionally inserted into each accommodation space of the base body (44).

8. The valve system as claimed in any one of the preceding claims, characterized in that an insert having a fluid port may be optionally inserted into each accommodation space (50, 72) of the base body (10, 12).

9. The valve system as claimed in any one of the claims 2 to 8, characterized in that a base rail may be built up of base bodies (10, 12) having the same nominal width of the main channel (30), but different nominal widths of the interface openings for the valve cores (14, 16).

## Revendications

1. Système modulaire de valve pour la collecte et la distribution de liquides, constitué de modules susceptibles d'être joints les uns aux autres et présentant une fonction de collecte ou une fonction de distribution,
chaque module présentant un corps de base (10, 12; 44; 80) allongé avec un canal principal (30) s'étendant en direction longitudinale et au moins deux logements (50, 72; 86, 88) dont chacun présente un orifice d'interface (52) relié avec le canal principal (30) et un orifice d'interface (54) relié à un canal de raccordement s'étendant transversalement au canal principal (30),
caractérisé en ce qu'au moins un des modules présente un insert de valve (14, 16; 40, 42; 82, 84) avec siège de valve pour chaque logement, lequel peut être sélectivement mis en place dans le logement associé, dans deux positions tournées de 180° l'une par rapport à l'autre, et présente deux orifices de raccordement qui, dans chacune des deux positions, se raccordent aux orifices d'interface (52, 54) du logement associé;
et en ce que l'insert de valve (14, 16; 40, 42; 82, 84), selon l'une ou l'autre position dans laquelle il est mis en place dans le logement du corps de base (10, 12; 44, 80), exerce une fonction de collecte ou une fonction de distribution.

2. Système de valve selon la revendication 1, caractérisé en ce que le canal principal (30) de chaque corps de base (10, 12) est aligné avec et relié à celui d'un corps de base voisin.

3. Système de valve selon la revendication 2, caractérisé en ce que deux corps de base (10, 12) voisins respectifs sont accouplés l'un à l'autre par enclenchement de manière réversible.

4. Système de valve selon la revendication 2, caractérisé en ce que les canaux de raccordement (34) s'étendant transversalement au canal principal (30) du corps de base sont pourvus chacun d'un orifice de raccordement (32) sur la surface de fond du corps de base (10) qui est détournée de l'insert de valve.

5. Système de valve selon la revendication 2, caractérisé en ce qu'on peut réaliser un rail de base à partir de deux types de corps de base (10, 12) qui se distinguent par le nombre de logements.

6. Système de valve selon l'une quelconque des revendications précédentes, caractérisé en ce qu'on peut accoler sur chaque face frontale d'un corps de base (10, 12) sélectivement un autre corps de base, un couvercle d'obturation ou un raccord à médium fluidique.

7. Système de valve selon l'une quelconque des revendications précédentes, caractérisé en ce qu'on peut mettre en place sélectivement un insert de capteur (74) dans chaque logement du corps de base (44).

8. Système de valve selon l'une quelconque des revendications précédentes, caractérisé en ce qu'on peut mettre en place sélectivement un insert avec raccord à médium fluidique dans chaque logement (50, 72) du corps de base (10, 12).

9. Système de valve selon l'une quelconque des revendications 2 à 8, caractérisé en ce qu'on peut réaliser un rail de base à partir de corps de base (10, 12) qui ont la même section nominale de passage du canal principal (30), mais différentes sections nominales de passage d'orifices d'interface pour les inserts de valve (14, 16).
